# EUROPEAN PATENT APPLICATION

(11) **EP 3 193 391 A1**
(43) Date of publication of application: **19.07.2017**
(21) Application number: 14901573.7
(22) Date of filing: 28.09.2014
(51) Int. Cl.: H01M 4/04, H01M 2/26

(54) **ELECTRODE PLATE COATING REMOVAL METHOD**

(30) Priority: 12.09.2014 CN 201410464606
(71) Applicant: Dongguan Amperex Technology Limited, Dongguan 523808 (CN); NingDe Amperex Technology Limited, 352100 Ningde City Fujian (CN)
(72) Inventor: ZHANG, Bin, Dongguan Guangdong 523808 (CN); ZHAO, Yi, Dongguan Guangdong 523808 (CN); HE, Ping, Dongguan Guangdong 523808 (CN); FANG, Hongxin, Dongguan Guangdong 523808 (CN); CHENG, Wenqiang, Dongguan Guangdong 523808 (CN)
(74) Representative: Manitz Finsterwald Patentanwälte PartmbB
(86) International application number: PCT/CN2014/087647
(87) International publication number: WO 2016/037390

(57) **Abstract**

Method for removing a coating layer of an electrode plate

The present invention provides a method for removing a coating layer of an electrode plate, an electrode plate comprises a current collector and a coating layer coated on each of at least one surface of the current collector, the method for removing the coating layer of the electrode plate comprises steps of: (I) fixing a region where the coating layer will be removed of the electrode plate by vacuum adsorption from a surface of the current collector opposite to the surface of the current collector on which the region where the coating layer will be removed is present; (II) emitting a laser beam on the coating layer within the region where the coating layer will be removed from a side of the surface of the current collector on which the region where the coating layer will be removed is present, so as to remove the coating layer of the electrode plate within the region where the coating layer will be removed and in turn expose the current collector of the electrode plate corresponding to the region where the coating layer will be removed; and (III) getting rid of a residue of the coating layer generated in the step (II). The region where the coating layer will be removed of the electrode plate is fixed by the vacuum adsorption firstly and then the coating layer within the region where the coating layer will be removed is removed by the laser beam, because the electrode plate is fixed, it can avoid a deformation of the electrode plate during laser removing due to a stress generated in the coating layer which is heated by the laser beam and a residual stress released by the removed coating layer.

## Description

### FIELD OF THE INVENTION

The present invention relates to a field of energy storage device, and particularly relates to a method for removing a coating layer of an electrode plate.

### BACKGROUND OF THE INVENTION

Lithium-ion battery has been widely concerned due to its advantages, such as high energy density, environment-friendly and the like, and has been widely applied in electronic devices, such as a mobile phone, a laptop and the like, and with technical development of electric vehicle, application of the lithium-ion battery in the field of electric vehicle is becoming more and more concerned.

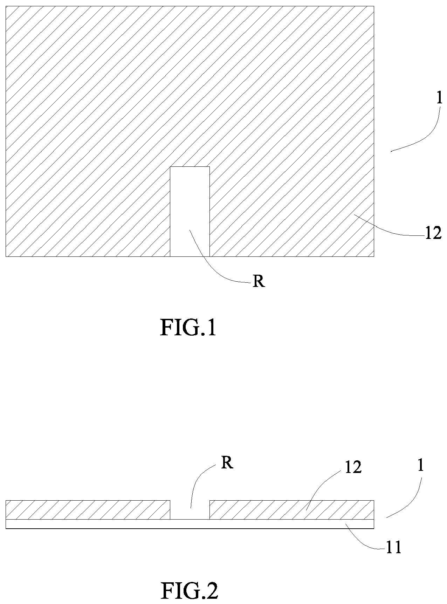

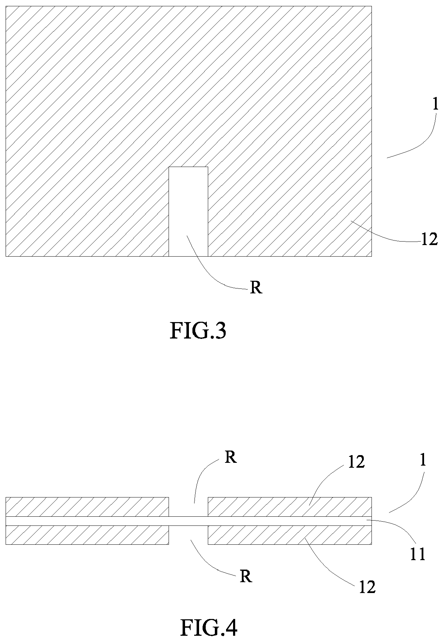

Although demand for the lithium-ion battery from market is becoming more and more large, manufacturing speed of the lithium-ion battery having high energy density is hard to promote. This is because: in processes for manufacturing the lithium-ion battery, one important process which affects the manufacturing speed of the lithium-ion battery is a process for welding an electrode tab onto an electrode plate of the lithium-ion battery, as shown in FIG. 1 and FIG. 2, a coating layer 12 of an electrode plate 1 is continuous due to coating, or an electrode tab needs to be soldered to the middle portion of the electrode plate, in order to realize that an electrode tab is welded onto the electrode plate 1, firstly the coating layer 12 of the electrode plate 1 within a region where the electrode tab will be welded (or this region is referred to as a region R where the coating layer will be removed) needs to be removed. And, in some special process of manufacturing the battery, it further requires to remove coating layers 12 in different shapes at different positions of the electrode plate 1 of the battery. For example, as shown in FIG. 3 and FIG.4, it sometimes further requires to remove the coating layer 12 within the region R where the coating layer will be removed at corresponding positions of the two surfaces of electrode plate 1.

At present, commonly used removing methods comprise a mechanical scrape removing method and a chemical removing method, however these two removing methods have many problems: the mechanical removing is difficult to ensure cleanness of removing, particularly for a thin electrode plate, the mechanical removing further easily scratches the electrode plate; the chemical removing damages the environment to a certain extent, has disadvantages, such as poor working environment, low manufacturing efficiency and the like. In view of deficiencies existing in the above two methods, United States patent No. US 8,309,880 B2, which issued on November 13, 2012, discloses a method for removing a coating layer of an electrode plate by means of a laser beam, and resolves the problems existing in the above two removing methods.

However, the method in this patent has the following deficiencies:
Firstly, the principle of laser removing is: under the action of laser, the coating layer adsorbs a certain energy, particles of the coating layer are gasified, sublimed and vibrate and the like, so that the coating layer is removed. Because an energy distribution of a laser beam emitted from a laser device generally is Gaussian distribution, the laser beam has high energy in the middle and low energy at an edge under such a distribution. However, a certain range of energy is required to remove the coating layer 12 of the electrode plate 1, so in such a laser beam whose energy is distributed as Gaussian distribution, relative high energy in the middle easily damages a foil (because a current collector 11 of the electrode plate 1 of the battery generally is a Cu foil and an Al foil, a thickness of the current collector 11 is several microns to ten microns, such a high energy part quite easily penetrates Al foil or Cu foil), thereby affecting removing quality and welding quality of the electrode tab; but energy at the edge is lower than the energy required on removing, so the coating layer remains at a position corresponding to the energy at the edge, thereby also affecting the removing quality. At the same time, these high energy and low energy make energy utilization rate quite low because they cannot be effectively utilized.
Secondly, while the coating layer 12 of the electrode plate 1 is removed by laser, under the action of laser, the coating layer 12 is heated, stress in the coating layer 12 will be changed, which in turn results in deformation of the electrode plate 1; after the coating layer 12 is removed, because residual stress is released, the electrode plate 1 will also generate a slight deformation, which in turn affects later welding of the electrode tab.
Thirdly, in this patent, an inert gas is blown toward the region of the electrode plate 1 where the coating layer has been removed, so as to realize cleaning and cooling of the electrode plate. However, particles within the region where the coating layer has been removed cannot be completely got rid of by such a manner, so that the particles will remain around the region where the coating layer has been removed, and affect property of the battery.
Fourthly, during removing, the laser will ceaselessly accelerate and decelerate at a corner of the region where the coating will be removed, which thus results in removing quality unstable upon moving of a laser head, a removing size not precise, so such a manner is hard to realize mass production.

### SUMMARY OF THE INVENTION

In view of the problem existing in the background, an object of the present invention is to provide a method for removing a coating layer of an electrode plate, which can avoid the deformation of the electrode plate.

In order to achieve the above object, the present invention provides a method for removing a coating layer of an electrode plate, an electrode plate comprises a current collector and a coating layer coated on each of at least one surface of the current collector, the method for removing the coating layer of the electrode plate comprises steps of: (I) fixing a region where the coating layer will be removed of the electrode plate by vacuum adsorption from a surface of the current collector opposite to the surface of the current collector on which the region where the coating layer will be removed is present; (II) emitting a laser beam on the coating layer within the region where the coating layer will be removed from a side of the surface of the current collector on which the region where the coating layer will be removed is present, so as to remove the coating layer of the electrode plate within the region where the coating layer will be removed and in turn expose the current collector of the electrode plate corresponding to the region where the coating layer will be removed; and (III) getting rid of a residue of the coating layer generated in the step (II).

The present invention has the following beneficial effects: the region where the coating layer will be removed of the electrode plate is fixed by the vacuum adsorption firstly and then the coating layer within the region where the coating layer will be removed is removed by the laser beam, because the electrode plate is fixed, it can avoid a deformation of the electrode plate during laser removing due to a stress generated in the coating layer which is heated by the laser beam and a residual stress released by the removed coating layer.

### BRIEF DESCRIPTION OF THE DRAWINGS

FIG. 1 is a top view of an embodiment of an electrode plate in a method for removing a coating layer of an electrode plate according to the present invention;
FIG. 2 is a front view of FIG. 1;
FIG. 3 is a top view of an embodiment of the electrode plate in the method for removing the coating layer of the electrode plate according to the present invention;
FIG. 4 is a front view of FIG. 3;
FIG. 5 is a top view of an embodiment of the electrode plate in the method for removing the coating layer of the electrode plate according to the present invention;
FIG. 6 is a front view of FIG. 5;
FIG. 7 is a top view of an embodiment of the electrode plate in the method for removing the coating layer of the electrode plate according to the present invention;
FIG. 8 is a front view of FIG. 7.

Reference numerals are represented as follows:
- 1: electrode plate
11 current collector
12 coating layer
- R: region where the coating layer will be removed

### DETAILED DESCRIPTION OF THE INVENTION

Hereinafter a method for removing coating layer of electrode plate according to the present invention will be described in combination with the figures.

Referring to FIG. 1 to FIG. 8, in a method for removing a coating layer of an electrode plate according to the present invention, an electrode plate 1 comprises a current collector 11 and a coating layer 12 coated on each of at least one surface of the current collector 11, the method for removing the coating layer of the electrode plate comprises steps of: (I) fixing a region R where the coating layer will be removed of the electrode plate 1 by vacuum adsorption from a surface of the current collector 11 opposite to the surface of the current collector 11 on which the region R where the coating layer will be removed is present; (II) emitting a laser beam on the coating layer 12 within the region R where the coating layer will be removed from a side of the surface of the current collector 11 on which the region R where the coating layer will be removed is present, so as to remove the coating layer 12 of the electrode plate 1 within the region R where the coating layer will be removed and in turn expose the current collector 11 of the electrode plate 1 corresponding to the region R where the coating layer will be removed; and (III) getting rid of a residue of the coating layer generated in the step (II).

In the method for removing the coating layer of the electrode plate according to the present invention, the region R where the coating layer will be removed of the electrode plate 1 is fixed by the vacuum adsorption firstly and then the coating layer 12 within the region R where the coating layer will be removed is removed by the laser beam, because the electrode plate 1 is fixed, it can avoid a deformation of the electrode plate 1 during laser removing due to a stress generated in the coating layer 12 which is heated by the laser beam and a residual stress released by the removed coating layer 12.

In the method for removing the coating layer of the electrode plate according to the present invention, the vacuum adsorption uses a vacuum degree ranged from -20KPa to -100KPa.

In the method for removing the coating layer of the electrode plate according to the present invention, referring to FIG. 1 and FIG. 2, one surface of the current collector 11 may be coated with the coating layer 12. In an embodiment as shown in FIG. 1 and FIG. 2, there is one region R where the coating layer will be removed of the electrode plate 1, but in practice, the coating layer 12 of the electrode plate within the region R where the coating layer will be removed is not limited to this in position, shape and number, and may be changed as desired. In addition, with respect to the coating layers 12 within the regions R where coating layer will be removed in different positions, different shapes and different numbers, the steps (I)-(III) each may be performed synchronously or non-synchronously.

In the method for removing the coating layer of the electrode plate according to the present invention, referring to FIG. 3, FIG. 4, FIG. 5, FIG. 6, FIG. 7 and FIG. 8, two surfaces of the current collector 11 each may be coated with the coating layer 12.

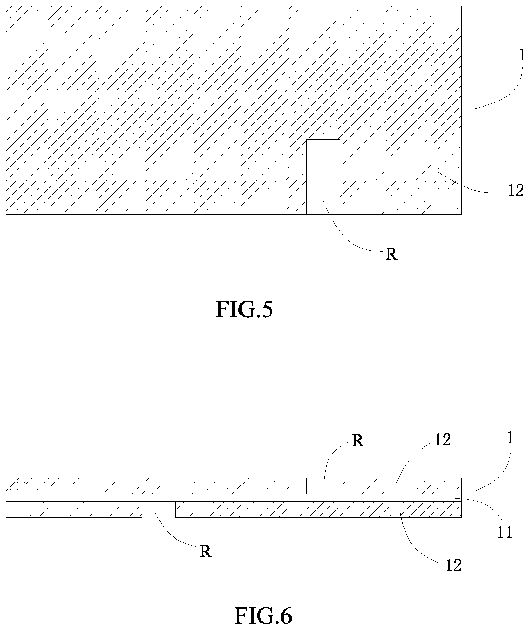

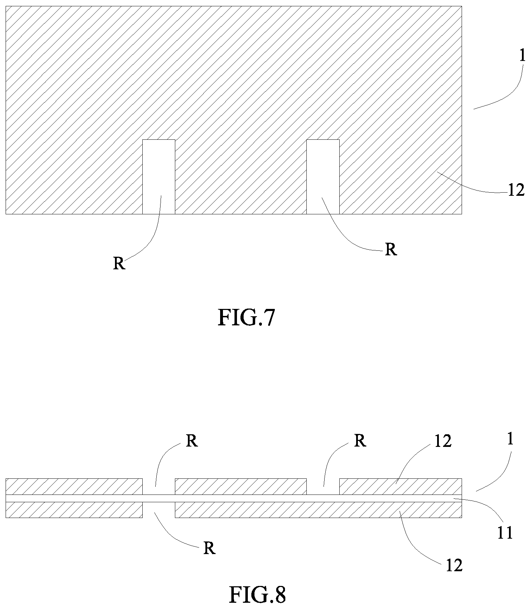

In an embodiment as shown in FIG. 3 and FIG. 4, two coating layers 12 respectively coated on the two surfaces of the current collector 11 are symmetric about the current collector 11. In an embodiment as shown in FIG. 5 and FIG. 6, the two coating layers 12 respectively coated on the two surfaces of the current collector 11 are not symmetric about the current collector 11. In an embodiment as shown in FIG. 7 and FIG. 8, the two coating layers 12 respectively coated on the two surfaces of the current collector 11 are not symmetric about the current collector 11. In an embodiment as shown in FIG. 7 and FIG. 8, the two coating layers 12 respectively coated on the two surfaces of the current collector 11 are partially symmetric about the current collector 11. In practice, the position, the shape and the number of the coating layers 12 within the regions R where coating layer will be removed respectively on the two surfaces of the current collector 11 of the electrode plate are not limited to this, and may be changed as desired. In addition, with respect to the coating layers 12 within the regions R where coating layer will be removed in different positions, different shapes and different numbers, the steps (I)-(III) each may be performed synchronously or non-synchronously.

In the method for removing the coating layer of the electrode plate according to the present invention, the electrode plate 1 is a positive electrode plate or a negative electrode plate.

In an embodiment of the method for removing the coating layer of the electrode plate according to the present invention, the electrode plate 1 may be an electrode plate of a lithium-ion battery.

In the method for removing coating layer of electrode plate according to the present invention, the coating layer 12 coated on each surface of the current collector 11 has a thickness ranged from 30 µm to 200 µm.

In an embodiment of the method for removing the coating layer of the electrode plate according to the present invention, the laser beam may be a flat-topped laser beam.

The energy of the flat-topped laser beam is uniformly distributed as a flat curve, and this can avoid that the coating layer 12 of the electrode plate 1 within the region R where the coating layer will be removed is not removed completely and at the same time can avoid the deformation of the electrode plate 1 which is not uniformly heated when a laser beam without uniformly distributed energy is used. As a result, all the energies of the flat-topped laser beam are used efficiently in the best way. The closer the value of the flatness is to 1, the better the result is.

In an embodiment of the method for removing the coating layer of the electrode plate according to the present invention, the laser beam may have a power of 20 W-500 W. The coating layer 12 of the electrode plate 1 within the region R where the coating layer will be removed cannot be removed effectively if the power of the laser beam is too low, and it needs to repeat the removal processes to remove the coating layer 12 completely, which will increase a thermal deformation of the electrode plate 1 if the power of the laser beam is too low; and it will generate excessive amount of heat, which will form a large heat-affected zone and damage the current collector 11 if the power of the laser beam is too high.

In an embodiment of the method for removing the coating layer of the electrode plate according to the present invention, the laser beam may remove the coating layer 12 of the electrode plate 1 within the region R where the coating layer will be removed by means of galvanometer scanning. The galvanometer scanning can ensure that a laser head is fixed, thus improving the removal quality, the removal stability and the removal dimensional accuracy by the laser beam, and achieving mass production easily.

In an embodiment of the method for removing the coating layer of the electrode plate according to the present invention, the step (III) may take at least one way of a negative pressure gettering and an airflow blowing. Thus, it can remove particles within the region where the coating layer has been removed completely. In an embodiment, the negative pressure gettering may use a pressure ranged from -5 KPa to -50 KPa.

In the method for removing the coating layer of the electrode plate according to the present invention, the method for the removing coating layer of the electrode plate further comprises a step after the step (III): getting rid of the residue of the coating layer 12 by dust-sticking, so as to assist in further getting rid of the residue.

In the method for removing the coating layer of the electrode plate according to the present invention, the exposed current collector 11 corresponding to the region R where the coating layer will be removed may be used to weld an electrode tab.

## Claims

1. A method for removing a coating layer of an electrode plate, an electrode plate (1) comprising a current collector (11) and a coating layer (12) coated on each of at least one surface of the current collector (11), wherein the method for removing the coating layer of the electrode plate comprising steps of:
(I) fixing a region (R) where the coating layer will be removed of the electrode plate (1) by vacuum adsorption from a surface of the current collector (11) opposite to the surface of the current collector (11) on which the region (R) where the coating layer will be removed is present;
(II) emitting a laser beam on the coating layer (12) within the region (R) where the coating layer will be removed from a side of the surface of the current collector (11) on which the region (R) where the coating layer will be removed is present, so as to remove the coating layer (12) of the electrode plate (1) within the region (R) where the coating layer will be removed and in turn expose the current collector (11) of the electrode plate (1) corresponding to the region (R) where the coating layer will be removed; and
(III) getting rid of a residue of the coating layer generated in the step (II).

2. The method for the removing coating layer of the electrode plate according to Claim 1, wherein the vacuum adsorption uses a vacuum degree ranged from -20 KPa to -100 KPa.

3. The method for removing the coating layer of the electrode plate according to Claim 1, wherein the coating layer (12) coated on each surface of the current collector (11) has a thickness ranged from 30 µm to 200 µm.

4. The method for removing the coating layer of the electrode plate according to Claim 1, wherein the laser beam is a flat-topped laser beam.

5. The method for removing the coating layer of the electrode plate according to Claim 1, wherein the laser beam has a power of 20 W-500 W.

6. The method for removing the coating layer of the electrode plate according to Claim 1, wherein the laser beam removes the coating layer (12) of the electrode plate (1) within the region (R) where the coating layer will be removed by means of galvanometer scanning.

7. The method for removing the coating layer of the electrode plate according to Claim 1, wherein the step (III) takes at least one way of a negative pressure gettering and an airflow blowing.

8. The method for removing the coating layer of the electrode plate according to Claim 7, wherein the negative pressure gettering uses a pressure ranged from -5KPa to -50KPa.

9. The method for removing the coating layer of the electrode plate according to Claim 1, wherein the method for the removing coating layer of the electrode plate further comprises a step after the step (III): getting rid of the residue of the coating layer (12) by dust-sticking.

10. The method for removing the coating layer of the electrode plate according to Claim 1, wherein the exposed current collector (11) corresponding to the region (R) where the coating layer will be removed is used to weld an electrode tab.
